# EUROPÄISCHE PATENTANMELDUNG

(11) **EP 4 080 846 A1**
(43) Veröffentlichungstag der Anmeldung: **26.10.2022**
(21) Anmeldenummer: 21169167.0
(22) Anmeldetag: 19.04.2021
(51) Int. Cl.: H04L 29/06, G06F 21/44

(54) **KRYPTOGRAPHISCH GESCHÜTZTE KOMMUNIKATIONSVERBINDUNG ZWISCHEN PHYSIKALISCHEN KOMPONENTEN**

(71) Anmelder: Siemens Aktiengesellschaft, 80333 München (DE)
(72) Erfinder: Falk, Rainer, 85586 Poing (DE); Fischer, Kai, 85598 Baldham (DE); Fries, Steffen, 85598 Baldham (DE); Heintel, Markus, 81377 München (DE); Klasen, Wolfgang, 85521 Ottobrunn (DE); Maftun, Aliza, 81549 München (DE)

(57) **Zusammenfassung**

Die Erfindung betrifft ein Verfahren zum Aufbauen einer kryptographisch geschützten Kommunikationsverbindung zwischen einer ersten physikalischen Komponente (1a) und einer zweiten physikalischen Komponente (2a), wobei die erste physikalische Komponente (1a) mit einem ersten digitalen Zwilling (1b) verbunden ist und wobei die zweite physikalische Komponente (2a) mit einem zweiten digitalen Zwilling (2b) verbunden ist. Die kryptographisch geschützten Kommunikationsverbindung wird durch ein von den digitalen Zwillingen (1b, 2b) aufgebautes Vertrauensverhältnis etabliert.

## Beschreibung

### HINTERGRUND DER ERFINDUNG

### Gebiet der Erfindung

Die vorliegende Erfindung betrifft ein Verfahren zum Aufbauen einer kryptographisch geschützten Kommunikationsverbindung zwischen einer ersten physikalischen Komponente und einer zweiten physikalischen Komponente. Außerdem betrifft die Erfindung eine zugehörige physikalische Komponente, ein Computerprogrammprodukt und ein computerlesbares Medium.

### Beschreibung des Stands der Technik

Unter einem digitalen Zwilling, auch als Digital Twin bezeichnet, wird ein virtuelles, digitales Abbild eines realen, d.h. physischen Objekts, insbesondere einer Komponente, eines Geräts, einer Maschine, der einer Anlage verstanden. Ein digitaler Zwilling kann auch als Verwaltungsschale oder Asset Administration Shell bezeichnet werden. Der digitale Zwilling befindet sich auf einem IT-System und kann unter einer Adresse, insbesondere einer IP-Adresse, DNS-Name oder eine URL, über ein Kommunikationsnetzwerk erreicht werden.

Daten des realen Objekts werden über eine Kommunikationsschnittstelle in seinen digitalen Zwilling abgebildet, entweder über ein direkte Kommunikationsschnittstelle oder indirekt über andere Systeme oder Komponenten, die in der Lage sind, mit dem realen Objekt und seinem digitalen Zwilling zu kommunizieren. Diese Schnittstellen sind bereits in einer Engineering- oder Comissioning-Phase bekannt, und eine geeignete Absicherung, insbesondere durch physikalische oder kryptographische Maßnahmen, kann bereits in diesen Phasen fest eingerichtet werden.

In Industrie 4.0 Szenarien interagieren reale Objekte zukünftig dynamisch und flexibel miteinander. Es besteht die Notwendigkeit, dass die realen Objekte mit weiteren Objekten oder Komponenten kommunizieren, mit welchen sie bisher keine Kommunikationsbeziehung hatten. Bei den realen Objekten und/oder den weiteren Objekten kann es sich insbesondere um einfache Sensoren oder Aktuatoren mit sehr eingeschränkten Funktionen und Ressourcen als auch um komplexere Systeme handeln.

Sichere Kommunikationsprotokolle im Automatisierungsumfeld, insbesondere OPC UA, TLS, IPsec/IKEv2, MACsec IEEE 802.1ae, eine Provisionierung von Credentials im Rahmen einer Engineering- oder Comissioning-Phase, eine Nutzung von Key Servern zur Schlüsselverteilung, insbesondere Global Discovery Service bei OPC UA, GDOI Key Server und eine Nutzung von IAM Diensten, insbesondere OpenID Connect, OAuth2, Kerberos, sind bekannt. Mit Hilfe dieser Dienste ist auch ein Verteilen, insbesondere eines applikationsspezifischen Schlüssels oder auch Tokens, möglich, welches im Nachgang zur Absicherung eines weiteren Applikationsprotokolls genutzt werden kann.

Die Aufgabe der Erfindung besteht darin, eine Lösung bereitzustellen, die es Komponenten im Industrie 4.0 Umfeld erlaubt, sicher miteinander zu kommunizieren, auch wenn zwischen diesen Komponenten bisher keine Kommunikationsbeziehung und Sicherheitsbeziehung bestand.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen. Die Erfindung betrifft ein Verfahren zum Aufbauen einer kryptographisch geschützten Kommunikationsverbindung zwischen einer ersten physikalischen Komponente und einer zweiten physikalischen Komponente, wobei die erste physikalische Komponente mit einem ersten digitalen Zwilling verbunden ist und wobei die zweite physikalische Komponente mit einem zweiten digitalen Zwilling verbunden ist.

Das Verfahren umfasst aus Sicht der ersten physikalischen Komponente die Schritte:
- Identifizieren der ersten physikalischen Komponente bei der zweiten physikalischen Komponente durch eine erste Identifizierungsinformation,
- Empfangen einer zweiten Identifizierungsinformation von der zweiten physikalischen Komponente durch die erste physikalische Komponente,
- Senden der zweiten Identifizierungsinformation an den ersten digitalen Zwilling durch die erste physikalische Komponente,
- Anfordern eines Ermittelns eines ersten Berechtigungsnachweises in Abhängigkeit von Sicherheitsrichtlinien, der ersten Identifizierungsinformation und der zweiten Identifizierungsinformation,
- Empfangen des ersten Berechtigungsnachweises durch die erste physikalische Komponente von dem ersten digitalen Zwilling und
- Aufbauen der kryptographisch geschützten Kommunikationsverbindung zwischen der ersten physikalischen Komponente und der zweiten physikalischen Komponente unter Einbezug des ersten Berechtigungsnachweises und der Sicherheitsrichtlinien.

Außerdem umfasst das Verfahren aus Sicht der zweiten Komponente die zusätzlichen Schritte:
- Senden der ersten Identifizierungsinformation an den zweiten digitalen Zwilling durch die zweite physikalische Komponente,
- Anfordern eines Ermittelns eines zweiten Berechtigungsnachweises in Abhängigkeit von Sicherheitsrichtlinien, der ersten Identifizierungsinformation und der zweiten Identifizierungsinformation,
- Empfangen des zweiten Berechtigungsnachweises durch die zweite physikalische Komponente von dem zweiten digitalen Zwilling und
- Aufbauen der kryptographisch geschützten Kommunikationsverbindung zwischen der ersten physikalischen Komponente und der zweiten physikalischen Komponente unter Einbezug des ersten Berechtigungsnachweises, des zweiten Berechtigungsnachweises und der Sicherheitsrichtlinien.

Ein Aspekt der Erfindung besteht darin, ein Verfahren bereitzustellen, mit dem das Vertrauensverhältnis einer Kommunikationsbeziehung zwischen zwei physikalischen Komponenten, der ersten physikalischen Komponente und der zweiten physikalischen Komponente, über deren digitale Zwillinge etabliert wird und die physikalischen Komponenten die notwendigen Daten zur Etablierung einer adäquat gesicherten Verbindung, den ersten Berechtigungsnachweis und den zweiten Berechtigungsnachweis, von ihrem digitalen Zwilling erhalten.

Die Erfindung stellt somit eine Lösung bereit, um dynamisch eine gesicherte Kommunikationsbeziehung aufzubauen, ohne dass ein vorab eingerichtetes Vertrauensverhältnis zwischen den physikalischen Komponenten existiert.

Im Folgenden wird auf die einzelnen Schritte des Verfahrens genauer eingegangen.

In den ersten beiden Schritten, dem Identifizieren der ersten physikalischen Komponente bei der zweiten physikalischen Komponente durch eine erste Identifizierungsinformation und dem Empfangen einer zweiten Identifizierungsinformation von der zweiten physikalischen Komponente durch die erste physikalische Komponente, besteht der Bedarf, dass zwei physikalische Komponenten miteinander sicher kommunizieren können. Hierzu identifizieren sich die Komponenten mit einer Identifizierungsinformation, auch als Identifier bezeichenbar, insbesondere eine MAC-Adresse, UUID, Gerätetyp und/oder Seriennummer.

Im darauffolgenden Schritt, dem Senden der zweiten Identifizierungsinformation an den ersten digitalen Zwilling durch die erste physikalische Komponente bzw. dem Senden der ersten Identifizierungsinformation an den zweiten digitalen Zwilling durch die zweite physikalische Komponente, geben die physikalischen Komponenten die Identifizierungsinformationen des Kommunikationspartners an ihren eigenen digitalen Zwilling weiter und beauftragen diesen ein Vertrauensverhältnis herzustellen, das zwischen den physikalischen Komponenten genutzt werden kann. Als Kommunikationskanal wird die bereits etablierte und abgesicherte Verbindung zwischen der physikalischen Komponente und seinem digitalen Zwilling verwendet.

Anschließend kann ein Aufbauen einer Verbindung zwischen dem ersten digitalen Zwilling und dem zweiten digitalen Zwilling folgen, falls nicht bereits eine Verbindung zwischen dem ersten digitalen Zwilling und dem zweiten digitalen Zwilling besteht. Das Anfordern des Aufbauens der Verbindung zwischen dem ersten digitalen Zwilling und dem zweiten digitalen Zwilling kann durch eine Aufforderung, insbesondere eine Anforderung einer Etablierung eines Vertrauensverhältnisses, das in die Berechtigungsnachweise mündet, ausgebildet sein. Dabei entscheidet der digitale Zwilling, in welcher Form das Vertrauensverhältnis aufgebaut wird. Es kann insbesondere in Form des Aufbauens der Verbindung ausgebildet sein. Außerdem sind die beiden digitalen Zwillinge ausgebildet, mittels eines Publish-Subscribe-Protokolls über einen Broker zu kommunizieren, sodass keine direkte Verbindung zwischen den beiden digitalen Zwillingen vorliegen muss.

In den beiden Schritten, dem Anfordern eines Aufbauens einer Verbindung zwischen dem ersten digitalen Zwilling und dem zweiten digitalen Zwilling und dem Anfordern eines Ermittelns eines ersten Berechtigungsnachweises bzw. eines zweiten Berechtigungsnachweises in Abhängigkeit von Sicherheitsrichtlinien, der ersten Identifizierungsinformation und der zweiten Identifizierungsinformation, etablieren die digitalen Zwillinge ein Vertrauensverhältnis stellvertretend für die physikalischen Komponenten. Hierzu authentifizieren sich die digitalen Zwillinge gegenseitig als Repräsentant ihrer physikalischen Komponente. Der ersten Berechtigungsnachweis wird hierbei von dem ersten digitalen Zwilling erstellt und der zweite Berechtigungsnachweis von dem zweiten digitalen Zwilling.

Im Rahmen der Aushandlung werden ein oder mehrere erste Berechtigungsnachweise und zweite Berechtigungsnachweise, auch als Credentials bezeichenbar, erzeugt. Berechtigungsnachweises können insbesondere als symmetrische Schlüssel, asymmetrische Schlüssel, Raw Keys oder in der Form von Zertifikaten, One-Time-Passwörtern oder Tokens ausgebildet sein.

Sicherheitsrichtlinien im Sinne der Erfindung sind insbesondere vorgebbare Regeln oder Kriterien einer konfigurierbaren Policy, die zur Prüfung einer Zulässigkeit des Erzeugens eines ersten Berechtigungsnachweises bzw. eines zweiten Berechtigungsnachweises auswertbar sind oder die dabei verwendet werden.

Das Ermitteln des ersten Berechtigungsnachweises bzw. des zweiten Berechtigungsnachweises kann als ein Erzeugen durch den ersten bzw. zweiten digitalen Zwilling ausgebildet sein. Zusätzlich oder alternativ kann ein externer Security-Server das Erzeugen übernehmen und den ersten Berechtigungsnachweis bzw. den zweiten Berechtigungsnachweis an die digitalen Zwillinge weiterleiten.

Das Anfordern des Ermittelns des ersten Berechtigungsnachweises bzw. des zweiten Berechtigungsnachweises kann so ausgestaltet sein, dass der der erste digitale Zwilling den ersten Berechtigungsnachweis bei dem zweiten digitalen Zwilling anfordert und der zweite digitale Zwilling den zweiten Berechtigungsnachweis bei dem ersten digitalen Zwilling anfordert. Alternativ können der erste digitale Zwilling und/oder der zweite digitale Zwilling den jeweiligen Berechtigungsnachweise von einer weiteren Einheit, insbesondere einem Server, erhalten.

Da digitale Zwillinge üblicherweise als Software auf klassischen IT-Systemen realisiert werden, können zur Absicherung der Verbindung zwischen den digitalen Systemen existierende Security-Infrastrukturen verwendet werden.

Im darauffolgenden Schritt, dem Empfangen des ersten Berechtigungsnachweises durch die erste physikalische Komponente bzw. dem Empfangen des zweiten Berechtigungsnachweises durch die zweite physikalische Komponente von dem ersten digitalen Zwilling bzw. zweitem digitalem Zwilling, werden die Credentials von den digitalen Zwillingen an die jeweilige physikalische Komponente übertragen.

Im darauffolgenden Schritt, dem Aufbauen der kryptographisch geschützten Kommunikationsverbindung zwischen der ersten physikalischen Komponente und der zweiten physikalischen Komponente unter Einbezug des ersten Berechtigungsnachweises, des zweiten Berechtigungsnachweises und der Sicherheitsrichtlinien, wird eine sichere kryptographisch geschützte Verbindung, insbesondere Kommunikationsbeziehung, zwischen den beiden physikalischen Komponenten unter Nutzung der durch die digitalen Zwillinge ausgehandelten Credentials aufgebaut.

Die Erfindung bietet den Vorteil, dass es ermöglicht wird, dass physikalische Komponenten dynamisch und ad hoc eine sichere Kommunikationsbeziehung aufbauen können, ohne dass die Notwendigkeit besteht, hierfür notwendige Credentials vorab auf die Komponenten provisionieren zu müssen, oder dass die zu erwartenden Teilnehmer vorab bekannt sind.

Die Komponenten müssen nicht Teil einer gemeinsamen Public Key Infrastruktur sein, wodurch der administrative Aufwand deutlich gesenkt wird. Es werden die Anforderungen an notwendige Ressourcen reduziert, so dass es auch Komponenten mit weniger Ressourcen ermöglicht wird, eine sicher Kommunikationsbeziehung aufzubauen. Insbesondere können komplexe Protokollabläufe für Schlüsselmanagement und fortwährende Aufrechterhaltung der Vertrauensbeziehung (bspw. Update von Root-Zertifikaten, OCSP Abfragen) von der physikalischen Komponente auf den digitalen Zwilling verlagert werden.

Die Erfindung betrifft außerdem ein Verfahren zum Aufbauen einer kryptographisch geschützten Kommunikationsverbindung zwischen einer ersten physikalischen Komponente und einer zweiten physikalischen Komponente, wobei die erste physikalische Komponente mit einem ersten digitalen Zwilling verbunden ist und wobei die zweite physikalische Komponente mit einem zweiten digitalen Zwilling verbunden ist, aus Sicht des ersten digitalen Zwillings.

Aus Sicht des ersten digitalen Zwillings umfasst das Verfahren die Schritte:
- Empfangen einer zweiten Identifizierungsinformation durch den ersten digitalen Zwilling von der ersten physikalische Komponente, wobei die zweiten Identifizierungsinformation zur Identifikation der zweiten physikalischen Komponente bei der ersten physikalischen Komponente verwendet wurde,
- Aufbauen einer Verbindung zwischen dem ersten digitalen Zwilling und dem zweiten digitalen Zwilling,
- Ermitteln eines ersten Berechtigungsnachweises in Abhängigkeit von Sicherheitsrichtlinien, einer ersten Identifizierungsinformation und der zweiten Identifizierungsinformation, wobei der erste Berechtigungsnachweis zum Aufbauen der kryptographisch geschützten Kommunikationsverbindung zwischen der ersten physikalischen Komponente und der zweiten physikalischen Komponente ausgebildet ist, wobei die ersten Identifizierungsinformation von dem zweiten digitalen Zwilling bereitgestellt wird und
- Senden des ersten Berechtigungsnachweises an die erste physikalische Komponente.

Außerdem umfasst das Verfahren aus Sicht des zweiten digitalen Zwillings die zusätzlichen Schritte:
- Empfangen einer ersten Identifizierungsinformation durch den zweiten digitalen Zwilling von der zweiten physikalische Komponente, wobei die erste Identifizierungsinformation zur Identifikation der ersten physikalischen Komponente bei der zweiten physikalischen Komponente verwendet wurde,
- Aufbauen einer Verbindung zwischen dem ersten digitalen Zwilling und dem zweiten digitalen Zwilling,
- Ermitteln eines zweiten Berechtigungsnachweises in Abhängigkeit von Sicherheitsrichtlinien, einer ersten Identifizierungsinformation und der zweiten Identifizierungsinformation, wobei der zweite Berechtigungsnachweis zum Aufbauen der kryptographisch geschützten Kommunikationsverbindung zwischen der ersten physikalischen Komponente und der zweiten physikalischen Komponente ausgebildet ist, wobei die zweite Identifizierungsinformation von dem ersten digitalen Zwilling bereitgestellt wird und
- Senden des zweiten Berechtigungsnachweises an die zweite physikalische Komponente.

In einer Weiterbildung der Erfindung ist die erste Identifizierungsinformation und/oder die zweite Identifizierungsinformation, als:
- MAC-Adresse,
- IP-Adresse (IPv4, IPv6),
- Universally Unique Identifier (UUID),
- Network Access Identifier (NAI),
- Gerätetyp und/oder
- Seriennummer
ausgebildet.

Als erste Identifizierungsinformation und/oder die zweite Identifizierungsinformation kann im Prinzip alles genommen werden, was eine Identifikation der ersten physikalischen Komponente und der zweiten physikalischen Komponente ermöglicht.

In einer weiteren Weiterbildung der Erfindung ist der erste Berechtigungsnachweis, auch als Credential bezeichenbar, als:
- symmetrischer Schlüssel,
- asymmetrischer Schlüssel,
- öffentlicher Schlüssel,
- Zertifikat,
- Passwort und/oder
- Token
ausgebildet.

Dieselben Ausführungsmöglichkeiten gelten für den zweiten Berechtigungsnachweis, welcher von dem zweiten digitalen Zwilling and die zweite physikalische Komponente gesendet wird.

In einer weiteren Weiterbildung der Erfindung wird das Aufbauen der kryptographisch geschützten Kommunikationsverbindung zwischen der ersten physikalischen Komponente und der zweiten physikalischen Komponente zusätzlich unter Einbezug eines zweiten Berechtigungsnachweises durchgeführt, wobei der zweite Berechtigungsnachweis von dem zweiten digitalen Zwilling erstellt wurde.

In einer weiteren Weiterbildung der Erfindung wird das Erzeugen des ersten Berechtigungsnachweises und/oder des zweiten Berechtigungsnachweises durch:
- den ersten digitalen Zwilling,
- den zweiten digitalen Zwilling oder
- durch eine weitere vertrauenswürdige Einheit, insbesondere einen Server,
durchgeführt.

Ein Aushandlung des ersten Berechtigungsnachweises und/oder des zweiten Berechtigungsnachweises kann somit direkt zwischen den digitalen Zwillingen realisiert werden oder über eine weitere vertrauenswürdige Einheit, insbesondere einen Management Server.

In einer weiteren Weiterbildung der Erfindung ist die Verbindung zwischen dem ersten digitalen Zwilling und dem zweiten digitalem Zwilling als Transport Layer Security Verbindung ausgebildet.

Bei einer direkten Aushandlung kann zwischen den digitalen Zwillingen eine Transport Layer Security (TLS, TLSv1.2-RFC 5246, TLSv1.3-RFC 8446) Verbindung etabliert werden, bei der sich beide digitalen Zwillinge mittels eines X.509 Zertifikates authentisieren und damit ein Vertrauensverhältnis aufbauen. Mittels der bekannten Key Exporter Funktion für TLS (RFC 5705) kann basierend auf dem im TLS Handshake ausgehandelten Mastersecrets ein symmetrischer Schlüssel exportiert werden, der den physikalischen Komponenten anschließend zur Verfügung gestellt wird.

Im Falle der Etablierung des ersten Berechtigungsnachweises und/oder des zweiten Berechtigungsnachweises, insbesondere des Credentials, über einen Management Server kann über die Einbindung von IAM (Identity Access Management) Diensten wie OpenID Connect ein Token bereitgestellt werden, was für die Etablierung des Vertrauensverhältnisses zwischen den digitalen Zwillingen genutzt werden kann.

In einer weiteren Weiterbildung der Erfindung werden die Sicherheitsrichtlinien von:
- der ersten physikalischen Komponente,
- der zweiten physikalischen Komponente,
- dem ersten digitalem Zwilling und/oder
- dem zweiten digitalem Zwilling
festgelegt.

In einer Erweiterung der Erfindung können die Sicherheitsrichtlinien, insbesondere eine Security-Policy, dynamisch bestimmt werden und abhängig von der Policy u.a. die Schutzziele, die Stärke der kryptographischen Verfahren und die Stärke der zu verwendenden Berechtigungsnachweise bzw. Credentials dynamisch bestimmt oder ausgehandelt werden.

Die Sicherheitsrichtlinien bzw. die Security-Policy kann insbesondere durch ein Security-Level repräsentiert werden. Bei einem niedrigen Security-Level können insbesondere einfache leichtgewichtige kryptographische Verfahren und kurze Schlüssel verwendet werden, bei einem hohen Security-Level müssen entsprechend starke Verfahren und lange Schlüssel verwendet werden.

Die Sicherheitsrichtlinien bzw. die Security-Policy kann durch die physikalischen Komponenten vorgegeben oder gegenseitig vereinbart und dem digitalen Zwilling mittgeteilt werden. In einer weiteren Ausprägung erfolgt die Bestimmung der Security-Policy durch die digitalen Zwillinge, wobei in dieser Ausprägung die Security-Policy der physikalischen Komponente gemeinsam mit den Credentials übergeben wird. Die Verbindung, insbesondere Kommunikationsbeziehung wird anschließend abhängig von der Security-Policy und die bereitgestellten Credentials gesichert.

In einer weiteren Weiterbildung der Erfindung weist das Verfahren die weiteren Schritte auf:
- Anforderns eines Ermittelns eines ersten Umgebungsparameters, wobei der erste Umgebungsparameter von Umgebungsbedingungen der ersten physikalischen Komponente abhängig ist,
- Empfangen des ersten Umgebungsparameters durch die erste physikalische Komponente oder durch den ersten digitalen Zwilling.

In einer weiteren Weiterbildung der Erfindung weist das Verfahren die weiteren Schritte auf:
- Anforderns eines Ermittelns eines zweiten Umgebungsparameters, wobei der zweite Umgebungsparameter von Umgebungsbedingungen der zweiten physikalischen Komponente abhängig ist,
- Empfangen des zweiten Umgebungsparameters durch die zweite physikalische Komponente oder durch den zweiten digitalen Zwilling.

In einer weiteren Weiterbildung der Erfindung wird das Aufbauen einer Verbindung zwischen dem ersten digitalen Zwilling und dem zweiten digitalem Zwilling in Abhängigkeit des ersten Umgebungsparameters und/oder des zweiten Umgebungsparameters durchgeführt. Insbesondere kann die Art der Verbindung und ein Sicherheitsniveau von dem ersten Umgebungsparameter und/oder dem zweiten Umgebungsparameter abhängen.

In einer weiteren Weiterbildung der Erfindung wird das Anfordern des Erzeugens des ersten Berechtigungsnachweises und/oder des zweiten Berechtigungsnachweises in Abhängigkeit des ersten Umgebungsparameters und/oder des zweiten Umgebungsparameters durchgeführt. Insbesondere wird das Erzeugen des ersten Berechtigungsnachweises und/oder des zweiten Berechtigungsnachweises nur durchgeführt, wenn der erste Umgebungsparameter dem zweiten Umgebungsparameter entspricht, identisch ist, oder die Abweichung der beiden Umgebungsparameter einen Schwellwert nicht überschreitet.

In den Weiterbildungen der Erfindung fließen somit Umgebungsbedingungen in Form von Umgebungsparametern der physikalischen Komponenten in die Etablierung des Vertrauensverhältnisses mit ein. Die digitalen Zwillinge etablieren insbesondere nur dann eine Verbindung, insbesondere ein Vertrauensverhältnis, wenn die Umgebungsbedingungen der physikalischen Komponenten ähnlich oder gleich sind. Die digitalen Zwillinge können allgemein nur dann eine Verbindung etablieren, insbesondere ein Vertrauensverhältnis, wenn die Umgebungsbedingungen der physikalischen Komponenten plausibel sind. Die Plausibilität kann insbesondere durch Vergleich mit einem Simulationsmodell oder mit Simulationsdaten bewertet werden. Dabei kann neben den aktuell vorliegenden Umgebungsbedingungen auch ein zeitlicher Verlauf von zurückliegend vorliegenden Umgebungsbedingungen ausgewertet werden.

Die Erfindung stellt durch diese Weiterbildungen eine Lösung bereit, um dynamisch eine einer Umgebung, insbesondere einer Automatisierungsumgebung, entsprechend adäquate gesicherte Kommunikationsbeziehung aufzubauen, ohne dass ein vorab eingerichtetes Vertrauensverhältnis zwischen den Komponenten existiert.

In einer weiteren Weiterbildung der Erfindung ist der erste Umgebungsparameter und/oder der zweite Umgebungsparameter als:
- Wert einer Temperatur,
- Wert einer Luftfeuchtigkeit,
- Wert einer Beschleunigung
- Wert einer Vibration,
- eine Signalstärke,
- ein verwendeter Access Point,
- eine oder mehrere sichtbare SSID eines Netzwerks,
- eine Lokalisierungsinformation,
- eine GPS-Position und/oder
- einer Information über eine identifizierte Komponente in einem Subnetz
ausgebildet.

Die Umgebungsparameter können durch Sensoren und/oder Autodiscovery Mechanismen, insbesondere vorhandene Beacon-Signale, insbesondere über Bluetooth, erfasst werden.

In einer weiteren Weiterbildung der Erfindung weist das Verfahren den weiteren Schritt auf:
Empfangen von Firewall-Richtlinien durch die erste physikalische Komponente von dem ersten digitalen Zwilling und/oder Empfangen von Firewall-Richtlinien durch die zweite physikalische Komponente von dem zweiten digitalen Zwilling, wobei der erste digitale Zwilling die Firewall-Richtlinien für die erste physikalische Komponente bereitstellt und wobei der zweite digitale Zwilling die Firewall-Richtlinien für die zweite physikalische Komponente bereitstellt.

Zusätzlich zu den Sicherheitsrichtlinien, insbesondere der Security-Policy, können Firewall-Richtlinien, insbesondere eine Firewall-Filter-Policy, übergeben werden, die bei Nutzung der Sicherheitsinformationen, insbesondere der eingerichteten Credentials, anzuwenden ist. Dadurch können die zulässigen Protokolle, insbesondere TCP, UDP, HTTP, MQTT, OPC UA, Portnummern und zulässige Dateninhalten, insbesondere durch eine Deep Packet Inspection überwacht, limitiert werden.

In einer weiteren Weiterbildung der Erfindung werden das Erzeugen des ersten Berechtigungsnachweises und/oder des zweiten Berechtigungsnachweises und die darauffolgenden Schritte in:
- periodischen Zeitabständen,
- manuell festlegbaren Zeitabständen und/oder
- bei Änderungen des ersten Umgebungsparameters und/oder zweiten Umgebungsparameters
wiederholt durchgeführt.

Das hat den Vorteil, dass die Schritte regelmäßig neu durchlaufen werden. Dabei können zwischenzeitliche Änderungen der Vertrauensbeziehungen oder Umgebungsbedingungen berücksichtigt werden. Die Kommunikation zwischen den physikalischen Komponenten kann dadurch kontrolliert, insbesondere beendet oder zeitweilig unterbrochen, werden.

Die Erfindung umfasst außerdem eine erste physikalische Komponente, wobei die erste physikalische Komponente ausgebildet ist, eine kryptographisch geschützte Kommunikationsverbindung zu einer zweiten physikalischen Komponente aufzubauen, wobei die erste physikalische Komponente mit einem ersten digitalen Zwilling verbunden ist und wobei die zweite physikalische Komponente mit einem zweiten digitalen Zwilling verbunden ist.

Die erste physikalische Komponente weist auf:
- eine Identifizierungseinheit, welche ausgebildet ist, die erste physikalische Komponente bei der zweiten physikalischen Komponente durch eine erste Identifizierungsinformation zu identifizieren,
- eine erste Empfangseinheit, welche ausgebildet ist, eine zweiten Identifizierungsinformation von der zweiten physikalischen Komponente zu empfangen,
- eine Sendeeinheit, welche ausgebildet ist, die zweite Identifizierungsinformation an den ersten digitalen Zwilling zu senden,
- optional eine erste Anforderungseinheit, welche ausgebildet ist ein Ausbilden einer Verbindung zwischen dem ersten digitalen Zwilling und dem zweiten digitalen Zwilling anzufordern,
- eine zweite Anforderungseinheit, welche ausgebildet ist, ein Ermitteln eines ersten Berechtigungsnachweises in Abhängigkeit von Sicherheitsrichtlinien, der ersten Identifizierungsinformation und der zweiten Identifizierungsinformation anzufordern,
- eine zweite Empfangseinheit, welche ausgebildet ist, den ersten Berechtigungsnachweis von dem ersten digitalen Zwilling zu empfangen und
- eine Kommunikationsschnittstelle, welche ausgebildet ist, die kryptographisch geschützte Kommunikationsverbindung zwischen der ersten physikalischen Komponente und der zweiten physikalischen Komponente unter Einbezug des ersten Berechtigungsnachweises und der Sicherheitsrichtlinien aufzubauen.

Korrespondierend zu der ersten physikalischen Komponente existiert eine zweite physikalischen Komponente,
Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens,
- Fig. 2: eine schematische Darstellung der physikalischen Komponenten und deren digitale Zwillinge und
- Fig. 3: eine schematische Darstellung der physikalischen Komponenten und deren digitale Zwillinge und eine Einheit zum Erfassen von Umgebungsparametern.

### DETAILLIERTE BESCHREIBUNG DER ERFINDUNG

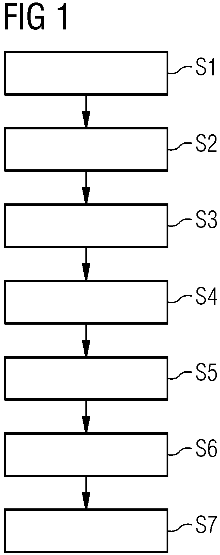

Fig. 1 zeigt ein Ablaufdiagramm des erfindungsgemäßen Verfahrens zum Aufbauen einer kryptographisch geschützten Kommunikationsverbindung zwischen einer ersten physikalischen Komponente 1a und einer zweiten physikalischen Komponente 2a, wobei die erste physikalische Komponente 1a mit einem ersten digitalen Zwilling 1b verbunden ist und wobei die zweite physikalische Komponente 2a mit einem zweiten digitalen Zwilling 2b verbunden ist.

Das Verfahren beinhaltet die Schritte:
- Schritt S1: Identifizieren der ersten physikalischen Komponente 1a bei der zweiten physikalischen Komponente 2a durch eine erste Identifizierungsinformation,
- Schritt S2: Empfangen einer zweiten Identifizierungsinformation von der zweiten physikalischen Komponente 2a durch die erste physikalische Komponente 1a,
- Schritt S3: Senden der zweiten Identifizierungsinformation an den ersten digitalen Zwilling 1b durch die erste physikalische Komponente 1a,
- Schritt S4: Anfordern eines Aufbauens einer Verbindung zwischen dem ersten digitalen Zwilling 1b und dem zweiten digitalen Zwilling 2b,
- Schritt S5: Anfordern eines Ermittelns eines ersten Berechtigungsnachweises in Abhängigkeit von Sicherheitsrichtlinien, der ersten Identifizierungsinformation und der zweiten Identifizierungsinformation,
- Schritt S6: Empfangen des ersten Berechtigungsnachweises durch die erste physikalische Komponente 1a von dem ersten digitalen Zwilling 1b und
- Schritt S7: Aufbauen der kryptographisch geschützten Kommunikationsverbindung zwischen der ersten physikalischen Komponente 1a und der zweiten physikalischen Komponente 2a unter Einbezug des ersten Berechtigungsnachweises und der Sicherheitsrichtlinien.

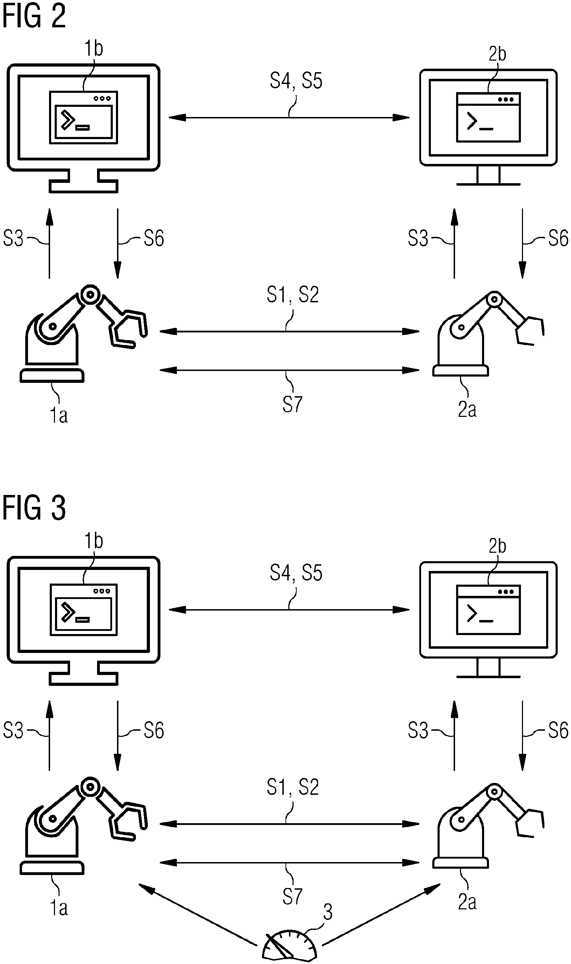

Fig. 2 zeigt eine schematische Darstellung der ersten physikalischen Komponenten 1a, der zweiten physikalischen Komponente 2a, des ersten digitalen Zwillings 1b und des zweiten digitalen Zwillings 2b. Zusätzlich sind die in Fig. 1 erläuterten Verfahrensschritte S1-S7 in Beziehung zu den physikalischen Komponenten 1a, 2a und deren digitalen Zwillinge 2a, 2b dargestellt.

Fig. 3 zeigt zusätzlich zu den Elementen der Fig. 2 eine Einheit zum Erfassen von Umgebungsparametern 3.

In einer weiteren Weiterbildung der Erfindung wird das Aufbauen einer Verbindung zwischen dem ersten digitalen Zwilling 1b und dem zweiten digitalem Zwilling 2b in Abhängigkeit des ersten Umgebungsparameters 3 und/oder des zweiten Umgebungsparameters 3 durchgeführt. Insbesondere kann die Art der Verbindung und ein Sicherheitsniveau von dem ersten Umgebungsparameter 3 und/oder dem zweiten Umgebungsparameter 3 abhängen.

Der erste Umgebungsparameter und der zweite Umgebungsparameters können durch die Einheit zum Erfassen von Umgebungsparametern 3 erfasst werden.

In einer weiteren Weiterbildung der Erfindung wird das Anfordern S5 des Erzeugens des ersten Berechtigungsnachweises und/oder des zweiten Berechtigungsnachweises in Abhängigkeit des ersten Umgebungsparameters 3 und/oder des zweiten Umgebungsparameters 3 durchgeführt. Insbesondere wird das Erzeugens S5 des ersten Berechtigungsnachweises und/oder des zweiten Berechtigungsnachweises nur durchgeführt, wenn der erste Umgebungsparameters 3 dem zweiten Umgebungsparameter 3 entspricht, identisch ist oder die Abweichung der beiden Umgebungsparameter 3 einen Schwellwert nicht überschreitet.

In den Weiterbildungen der Erfindung fließen somit Umgebungsbedingungen in Form von Umgebungsparametern 3 der physikalischen Komponenten 1a, 1b in die Etablierung des Vertrauensverhältnisses mit ein. Die digitalen Zwillinge 1b, 2b etablieren insbesondere nur dann eine Verbindung, insbesondere ein Vertrauensverhältnis, wenn die Umgebungsbedingungen der physikalischen Komponenten 1a, 1b ähnlich oder gleich sind.

Die Erfindung stellt durch diese Weiterbildungen eine Lösung bereit, um dynamisch eine einer Umgebung, insbesondere einer Automatisierungsumgebung, entsprechend adäquate gesicherte Kommunikationsbeziehung aufzubauen, ohne dass ein vorab eingerichtetes Vertrauensverhältnis zwischen den Komponenten existiert.

In einer weiteren Weiterbildung der Erfindung ist der erste Umgebungsparameter 3 und/oder der zweite Umgebungsparameter 3 als:
- Wert einer Temperatur,
- Wert einer Luftfeuchtigkeit,
- Wert einer Beschleunigung
- Wert einer Vibration,
- eine Signalstärke,
- ein verwendeter Access Point,
- ein oder mehrere sichtbare SSID eines Netzwerks,
- eine Lokalisierungsinformation,
- eine GPS-Position und/oder
- einer Information über eine identifizierte Komponente in einem Subnetz
ausgebildet.

Die Einheit zum Erfassen von Umgebungsparametern 3 kann durch einen Sensoren und/oder Autodiscovery Mechanismen, der insbesondere Beacon-Signale erfasst, insbesondere über Bluetooth, ausgebildet sein.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Aufbauen einer kryptographisch geschützten Kommunikationsverbindung zwischen einer ersten physikalischen Komponente (1a) und einer zweiten physikalischen Komponente (2a), wobei die erste physikalische Komponente (1a) mit einem ersten digitalen Zwilling (1b) verbunden ist und wobei die zweite physikalische Komponente (2a) mit einem zweiten digitalen Zwilling (2b) verbunden ist,
mit den Schritten:
- Identifizieren (S1) der ersten physikalischen Komponente (1a) bei der zweiten physikalischen Komponente (2a) durch eine erste Identifizierungsinformation,
- Empfangen (S2) einer zweiten Identifizierungsinformation von der zweiten physikalischen Komponente (2a) durch die erste physikalische Komponente (1a),
- Senden (S3) der zweiten Identifizierungsinformation an den ersten digitalen Zwilling (1b) durch die erste physikalische Komponente (1a),
- Anfordern (S5) eines Ermittelns eines ersten Berechtigungsnachweises in Abhängigkeit von Sicherheitsrichtlinien, der ersten Identifizierungsinformation und der zweiten Identifizierungsinformation,
- Empfangen (S6) des ersten Berechtigungsnachweises durch die erste physikalische Komponente (1a) von dem ersten digitalen Zwilling (1b) und
- Aufbauen (S7) der kryptographisch geschützten Kommunikationsverbindung zwischen der ersten physikalischen Komponente (1a) und der zweiten physikalischen Komponente (2a) unter Einbezug des ersten Berechtigungsnachweises und der Sicherheitsrichtlinien.

2. Verfahren zum Aufbauen einer kryptographisch geschützten Kommunikationsverbindung zwischen einer ersten physikalischen Komponente (1a) und einer zweiten physikalischen Komponente (2a), wobei die erste physikalische Komponente (1a) mit einem ersten digitalen Zwilling (1b) verbunden ist und wobei die zweite physikalische Komponente (2a) mit einem zweiten digitalen Zwilling (2b) verbunden ist,
mit den Schritten:
- Empfangen (S3) einer zweiten Identifizierungsinformation durch den ersten digitalen Zwilling (1b) von der ersten physikalische Komponente (1a), wobei die zweiten Identifizierungsinformation zur Identifikation der zweiten physikalischen Komponente (2a) bei der ersten physikalischen Komponente (1a) verwendet wurde (S1, S2),
- Aufbauen (S4) einer Verbindung zwischen dem ersten digitalen Zwilling (1b) und dem zweiten digitalen Zwilling (2b),
- Ermitteln (S5) eines ersten Berechtigungsnachweises in Abhängigkeit von Sicherheitsrichtlinien, einer ersten Identifizierungsinformation und der zweiten Identifizierungsinformation, wobei der erste Berechtigungsnachweis zum Aufbauen (S7) der kryptographisch geschützten Kommunikationsverbindung zwischen der ersten physikalischen Komponente (1a) und der zweiten physikalischen Komponente (2a) ausgebildet ist, wobei die ersten Identifizierungsinformation von dem zweiten digitalen Zwilling (2b) bereitgestellt wird und
- Senden (S6) des ersten Berechtigungsnachweises an die erste physikalische Komponente (1a).

3. Verfahren nach einem der vorhergehenden Ansprüche,
wobei die erste Identifizierungsinformation und/oder die zweite Identifizierungsinformation als:
- MAC Adresse,
- IP-Adresse (IPv4, IPv6),
- Universally Unique Identifier (UUID),
- Network Access Identifier (NAI),
- Gerätetyp und/oder
- Seriennummer
ausgebildet ist.

4. Verfahren nach einem der vorhergehenden Ansprüche,
wobei der erste Berechtigungsnachweis als:
- symmetrischer Schlüssel,
- asymmetrischer Schlüssel,
- öffentlicher Schlüssel,
- Zertifikat,
- Passwort und/oder
- Token
ausgebildet ist.

5. Verfahren nach einem der vorhergehenden Ansprüche,
wobei das Aufbauen (S7) der kryptographisch geschützten Kommunikationsverbindung zwischen der ersten physikalischen Komponente (1a) und der zweiten physikalischen Komponente (2a) zusätzlich unter Einbezug eines zweiten Berechtigungsnachweises durchgeführt wird, wobei der zweite Berechtigungsnachweis von dem zweiten digitalen Zwilling (2b) erstellt wurde.

6. Verfahren nach einem der vorhergehenden Ansprüche,
wobei das Erzeugen des ersten Berechtigungsnachweises (S4) durch:
- den ersten digitalen Zwilling (1a) oder
- durch eine weitere vertrauenswürdige Einheit, insbesondere einen Server,
durchgeführt wird.

7. Verfahren nach einem der vorhergehenden Ansprüche,
wobei die Sicherheitsrichtlinien von:
- der ersten physikalischen Komponente (1a),
- der zweiten physikalischen Komponente (2a),
- dem ersten digitalem Zwilling (1b) und/oder
- dem zweiten digitalem Zwilling (2b)
festgelegt werden.

8. Verfahren nach einem der vorhergehenden Ansprüche,
mit den weiteren Schritten:
- Anforderns eines Ermittelns eines ersten Umgebungsparameters (3), wobei der erste Umgebungsparameter von Umgebungsbedingungen der ersten physikalischen Komponente (1a) abhängig ist,
- Empfangen (S8) des ersten Umgebungsparameters (3) durch die erste physikalische Komponente (1a) oder durch den ersten digitalen Zwilling (1b).

9. Verfahren nach Anspruch 8,
wobei das Aufbauen (S4) einer Verbindung zwischen dem ersten digitalen Zwilling (1b) und dem zweiten digitalem Zwilling (2b) in Abhängigkeit des ersten Umgebungsparameters (3) durchgeführt wird.

10. Verfahren nach einem der Ansprüche 8 oder 9,
wobei der erste Umgebungsparameter (3) als:
- Wert einer Temperatur,
- Wert einer Luftfeuchtigkeit,
- Wert einer Beschleunigung
- Wert einer Vibration,
- eine Signalstärke,
- ein verwendeter Access Point,
- mindestens eine sichtbare SSID eines Netzwerks,
- eine Lokalisierungsinformation,
- eine GPS-Position und/oder
- einer Information über eine identifizierte Komponente in einem Subnetz
ausgebildet ist.

11. Verfahren nach einem der vorhergehenden Ansprüche,
mit dem weiteren Schritt:
- Empfangen von Firewall-Richtlinien durch die erste physikalische Komponente (1a) von dem ersten digitalen Zwilling (1b).

12. Verfahren nach einem der vorhergehenden Ansprüche, wobei das Erzeugen (S5) des ersten Berechtigungsnachweises und darauffolgende Schritte in:
- periodischen Zeitabständen,
- manuell festlegbaren Zeitabständen und/oder
- bei Änderungen des ersten Umgebungsparameters (3) nach Anspruch 8
wiederholt durchgeführt werden.

13. Erste physikalische Komponente (1a), wobei die erste physikalische Komponente (1a) ausgebildet ist, eine kryptographisch geschützte Kommunikationsverbindung zu einer zweiten physikalischen Komponente (2a) aufzubauen, wobei die erste physikalische Komponente (1a) mit einem ersten digitalen Zwilling (1b) verbunden ist und wobei die zweite physikalische Komponente (2a) mit einem zweiten digitalen Zwilling (2b) verbunden ist,
aufweisend:
- eine Identifizierungseinheit, welche ausgebildet ist, die erste physikalische Komponente (1a) bei der zweiten physikalischen Komponente (2a) durch eine erste Identifizierungsinformation zu identifizieren,
- eine erste Empfangseinheit, welche ausgebildet ist, eine zweiten Identifizierungsinformation von der zweiten physikalischen Komponente (2a) zu empfangen,
- eine Sendeeinheit, welche ausgebildet ist, die zweite Identifizierungsinformation an den ersten digitalen Zwilling (1b) zu senden,
- eine Anforderungseinheit, welche ausgebildet ist ein Ermitteln eines ersten Berechtigungsnachweises in Abhängigkeit von Sicherheitsrichtlinien, der ersten Identifizierungsinformation und der zweiten Identifizierungsinformation anzufordern,
- eine zweite Empfangseinheit, welche ausgebildet ist, den ersten Berechtigungsnachweis zu empfangen und
- eine Kommunikationsschnittstelle, welche ausgebildet ist die kryptographisch geschützte Kommunikationsverbindung zwischen der ersten physikalischen Komponente (1a) und der zweiten physikalischen Komponente (2a) unter Einbezug des ersten Berechtigungsnachweises und der Sicherheitsrichtlinien aufzubauen.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.
